# EUROPÄISCHE PATENTSCHRIFT

(11) **EP 0 737 169 B1**
(45) Veröffentlichungstag und Bekanntmachung des Hinweises auf die Patenterteilung: **24.02.1999**
(21) Anmeldenummer: 95904536.0
(22) Anmeldetag: 27.12.1994
(51) Int. Cl.: C02F 1/68, B09C 1/00

(54) **ZUSAMMENSETZUNG ZUR AUFBEREITUNG VON WASSER UND SANIERUNG VON BÖDEN**
COMPOSITION FOR TREATING WATER AND SANITISING SOILS
COMPOSITION DE TRAITEMENT D'EAU ET D'ASSAINISSEMENT DE SOLS

(30) Priorität: 30.12.1993 DE 4344926
(43) Veröffentlichungstag der Anmeldung: 16.10.1996
(73) Patentinhaber: Söll, Peter, 95028 Hof (DE); Willuweit, Thomas, 95028 Hof (DE)
(72) Erfinder: WILLUWEIT, Thomas, D-95028 Hof (DE)
(74) Vertreter: Christophersen, Ruth
(86) Internationale Anmeldenummer: EP9404319
(87) Internationale Veröffentlichungsnummer: WO9518070

(56) Entgegenhaltungen:
- DATABASE WPI Section Ch, Week 7803 Derwent Publications Ltd., London, GB; Class D15, AN 78-05311A & JP,A,52 144 145 (ISHIKAWAJIMA-HARIMA HEAVY) , 1.Dezember 1977
- DATABASE WPI Section Ch, Week 8137 Derwent Publications Ltd., London, GB; Class D15, AN 81-66659D & JP,A,56 091 888 (SASAKURA KIKAI SEIS) , 25.Juli 1981

## Beschreibung

Die vorliegende Erfindung betrifft eine Zusammensetzung zur Aufbereitung von Wasser, insbesondere von stehenden Gewässern und Trinkwasser, z. B. von Trinkwasser welches durch Aufbereitungsanlagen erhalten wird und zur Sanierung von sauren Böden.

Die Aufbereitung von Trinkwasser sowie die Rekultivierung von Gewässern stellt in einer Industriegesellschaft ein immer größer werdendes Problem dar. Ein bekanntes Problem ist die Versauerung der Gewässer, das bedeutet, daß durch saure Zuflüsse, sauren Regen oder durch den Zufluß von sauren Bodenbestandteilen der pH-Wert der Gewässer sinkt. Durch den niedrigen pH-Wert der Gewässer wird das natürliche pH-Gleichgewicht dieser Gewässer gestört, hinzu kommt, daß bei niedrigen pH-Werten Schwermetallsalze leicht löslich sind, wodurch sich der Gehalt an für Lebewesen schädlichen Schwermetallionen stark erhöht. Hinzukommt, daß sich Wasserleitungsrohre aus Metall bei niedrigem pH-Wert auflösen. Insgesamt führt die starke Erniedrigung bzw. starke Erhöhung des pH-Wertes von Gewässern, insbesondere von stehenden Gewässern zu einem Verlust der Selbstreinigungskraft dieser Gewässer und schließlich zu einem langsamen Absterben.

Ein weiteres Problem ist, daß saure Gewässer häufig auch unter einer zu niedrigen Kalkhärte leiden, was zu einer weiteren Schwächung der biologischen Aktivität dieser Gewässer führt.

Auch Trinkwasser mit zu hohem bzw. zu niedrigem pH-Wert und einer zu geringen Kalkhärte führt zu Gesundheitsschäden.

Häufig weist Trinkwasser, welches aus üblichen Aufbereitungsanlagen erhalten wird, nicht die vom Gesetzgeber vorgeschriebenen Werte für den pH-Wert, die erforderliche Kalkhärte und Pufferkapazität auf und kann somit nicht an den Verbraucher weitergegeben werden. Der pH-Wert soll laut Trinkwasserverordnung zwischen 6,5 und 9,5 liegen.

Um den pH-Wert und die Kalkhärte von sauren Gewässern zu erhöhen, wird üblicherweise Kalk, CaCO₃, verwendet. Studien haben jedoch ergeben, daß der Kalk sich auf dem Gewässerboden als Schicht absetzt und dort keine pH-Wert-erhöhende Wirkung entfaltet.

Bei stark sauren Gewässern, die insbesondere unter dem Zufluß von sauren Industrieabwässern leiden, wird in einigen Fällen auch NaOH zugesetzt. Die Zugabe von NaOH bewirkt nur eine Neutralisation, aber keine Aufhärtung dieses Gewässers und auch die Pufferkapazität wird nicht verbessert, so daß keine Belebung des Gewässers erreicht wird.

Ein weiteres Mittel, das zur Erhöhung des pH-Wertes von Gewässern und/oder Böden eingesetzt wird, ist Na₂CO₃, Soda. Der Zusatz von Soda führt zu einem kurzfristigen Erfolg. Es trägt nicht zu einer Erhöhung der Wasserhärte bei. Das Risiko der Schädigung der belebten Sedimente ist durch lokale Überalkalisierung groß.

Aufgabe der vorliegenden Erfindung ist es, eine Zusammensetzung zur Verfügung zu stellen, mit der es möglich ist, stark saure bzw. alkalische Gewässer und Böden langfristig zu sanieren, d. h. insbesondere einen stabilen pH-Wert in dem Bereich von 6,5 bis 9,5 zusammen mit einer ausreichenden Kalkhärte zur Verfügung zu stellen.

Gegenstand der vorliegenden Erfindung ist somit eine Zusammensetzung zur Aufbereitung von Wasser und Sanierung von Böden, welche enthält
A. CaCO₃,
B. CaCl₂ und/oder Ca(NO₃)₂ und ggf. Magnesiumsalze,
C. NaHCO₃ und ggf. KHCO₃
wobei die Komponenten A und B in Stoffmengenverhältnissen von 0,1 : 1 bis 2 : 1 und die Komponenten B und C in Stoffmengenverhältnissen von 1 : 3 bis 2 : 1 vorliegen.

Überraschenderweise wurde gefunden, daß bei der Anwendung der erfindungsgemäßen Zusammensetzung sowohl in Gewässern als auch bei Böden ein stabiler pH-Wert zwischen 6,5 und 9,5 erreicht wird, gleichzeitig wird die Kalkhärte erhöht und eine stabile Pufferkapazität erhalten. Im allgemeinen und selbst bei starksauren Gewässern wurde bei Einsatz der erfindungsgemäßen Zusammensetzung bereits nach wenigen Tagen eine deutliche Belebung des Gewässers mit Mikroorganismen festgestellt. Dies ist um so überraschender, weil die Komponente B, nämlich CaCl₂ bzw. Ca(NO₃)₂ und ggf. Magnesiumsalze, bei Lösen in Wasser, ebenfalls sauer reagiert. Überraschend ist auch, daß durch die Anwendung hohe pH-Werte in Gewässern sinken und trotzdem eine Erhöhung der Härte und der Pufferkapazität gegenüber Säuren stattfindet. Es wurde festgestellt, daß Metalle sich in weitem Umfang ausfällen lassen und daß dabei auch kolloidal suspendierte Teilchen erfaßt werden. Ferner wurde beobachtet, daß Huminsäuren Aggregate bilden, wodurch deren mobilisierende Eigenschaften auf Metalle herabgesetzt werden.

Als Komponenten der erfindungsgemäßen Zusammensetzung sind alle im Handel erhältlichen Qualitäten geeignet. Übliche im Handel erhältliche Calciumsalze werden aus natürlich vorkommenden Mineralien gewonnen und können Beimengungen anderer Komponenten enthalten, die aber in der Regel die Wirkung der erfindungsgemäßen Zusammensetzung nicht beeinträchtigen. Beispielsweise können entsprechend den natürlich vorkommenden Gehalten auch Magnesiumsalze enthalten sein. Soll die Zusammensetzung zur Trinkwasseraufbereitung verwendet werden, sind Qualitäten mit Reinheitsgraden, die für diesen Zweck geeignet sind, bevorzugt, insbesondere Komponenten in analytischer Qualität.

Als Komponente A kann jedes beliebige CaCO₃ verwendet werden, welches im Handel erhältlich ist. Als besonders günstig hat sich frisch gefälltes CaCO₃ erwiesen. Bei sehr feinkörnigen Qualitäten (Durchmesser ca. 1 µm), reichen sehr kleine Gehalte an Calciumcarbonat (Stoffmengenanteile von 0,01 bis 0,1 bezogen auf die Stoffmenge an B) aus. Die Komponente A kann bis zu 25 Gew.-% MgCO₃ enthalten. Der Gehalt an MgCO₃ sollte jedoch nicht zu hoch sein, da die Gefahr zu hoher alkalisierender Wirkung besteht, mit dem Ergebnis der einsetzenden Entcarbonisierung und damit der Kalkfällung (Enthärtung). Diese steht dem Sinn der Erfindung diametral gegenüber.

Als Komponente B werden erfindungsgemäß Calciumchlorid und/oder Calciumnitrat eingesetzt. Calciumchlorid wird bevorzugt eingesetzt. Auch wenn die Calciumsalze in Wasser einen pH-Wert im sauren Bereich aufweisen, wird durch Zusatz dieser Komponente ein stabiler pH-Wert in dem Bereich von 6,5 und 9,5 erreicht. Die Auswahl dieser Calciumsalze ist auf keine speziellen Qualitäten beschränkt, es können alle beliebigen handelsüblichen Calciumsalze eingesetzt werden. Soll die erfindungsgemäße Zusammensetzung zur Sanierung von Böden eingesetzt werden, hat es sich als besonders vorteilhaft erwiesen, wenn als Komponente B ein Gemisch von CaCl₂, bis zu 10 Gew.-% Ca(NO₃)₂ und Magnesiumsalzen, insbesondere aus der Gruppe Chlorid, Nitrat, Carbonat, Oxid und Sulfat eingesetzt wird, wobei das Stoffmengenverhältnis von Calciumsalzen zu Magnesiumsalzen in weiten Bereichen variieren kann und bevorzugt von 0,8 : 1 bis 10 : 1, besonders bevorzugt von 1 : 1 bis 6 : 1, beträgt.

Das Stoffmengenverhältnis der Komponenten A und B beträgt in der Regel 0,1 : 1 bis 2 : 1, bevorzugt 1 : 1,3 bis 1,3 : 1. Sollen alkalische Gewässer aufbereitet werden, so liegt die Komponente B bevorzugt in einem Überschuß vor, das Stoffmengenverhältnis ist dann bevorzugt 1 : 1,3 bis 1 : 2.

Als dritte Komponente enthält die Zusammensetzung NaHCO₃. Als weitere Komponente kann gegebenenfalls auch KHCO₃ vorhanden sein. Auch in diesem Fall können handelsübliche Produkte jeder Qualität eingesetzt werden. KHCO₃ wird insbesondere dann eingesetzt, wenn kaliumarme natürliche Wasser oder Böden behandelt werden sollen. In diesem Fall liegen NaHCO₃ und KHCO₃ in Stoffmengenverhältnissen von 10 : 1 bis 1 : 1 vor. Das KHCO₃ kann auch in einem Überschuß verwendet werden, dies ist jedoch aus Kostengründen wenig bevorzugt.

Die Komponenten B und C liegen üblicherweise in Stoffmengenverhältnissen von 1 : 3 bis 2 : 1, bevorzugt 1 : 2,3 bis 1 : 1,7, besonders bevorzugt 1 : 2,1 bis 1 : 1,9 vor.

Die erfindungsgemäße Zusammensetzung kann weitere übliche Zusätze enthalten, die in anderen Mitteln zur Wasseraufbereitung und Bodensanierung enthalten sein können.

Sollen stark saure Gewässer bzw. Böden saniert werden, so kann die erfindungsgemäße Zusammensetzung auch geringe Mengen Soda, Na₂CO₃ enthalten. Soda kann in einer Menge bis zu 20 % bezogen auf die Stoffmenge der Komponente C zugesetzt werden.

Die einzelnen Komponenten können als Gemisch oder nacheinander dem zu sanierenden Gewässer bzw. Trinkwasser oder Boden zugesetzt werden. Es ist auch möglich, zuerst die Komponenten B und C und gegebenenfalls Soda einzusetzen, und die Komponente A später über dem Gewässer bzw. dem Boden zu verteilen.

Der Zusatz der erfindungsgemäßen Zusammensetzung kann auf jede beliebige Weise erfolgen. Bei kleinen Gewässer- bzw. Bodenflächen kann eine Verteilung per Hand erfolgen, bei großen Flächen haben sich maschinelle Verteilungsformen, insbesondere auch durch die Luft, als günstig erwiesen. Bei der Aufbereitung von Trinkwasser kann die erfindungsgemäße Zusammensetzung den Aufbereitungsanlagen zweckmäßiger weise vor einer eventuellen mechanischen Entsäuerung oder Filtration zugegeben werden.

Ein weiterer Gegenstand der vorliegenden Erfindung ist ein Verfahren zur Aufbereitung von Wasser, das dadurch gekennzeichnet ist, daß man die Komponenten B, CaCl₂ und/oder Ca(NO₃)₂ und ggf. Magnesiumsalze, und C, NaHCO₃ und ggf. KHCO₃, getrennt in H₂O löst, die Lösungen mit dem zu reinigenden Wasser vermischt und das erhaltene Gemisch über CaCO₃ leitet.

Um die Aktivität der Komponenten B und C nicht zu beeinträchtigen, ist es vorteilhaft, die Lösungen der Komponenten B und C in den entsprechenden Stoffmengenverhältnissen zügig mit aufzubereitenden Wasser zu vermischen und über CaCO₃ zu leiten. In einer bevorzugten Ausführungsform liegt das CaCO₃ als Calciumbett vor.

Es hat sich als vorteilhaft erwiesen, die Komponenten B und C werden dem aufzuarbeitenden Wasser mengenproportional beizumischen. Bevorzugt liegen die Komponenten B und C in Stoffmengenverhältnissen von 1 : 3 bis 2 : 1, bevorzugt 1 : 2,3 bis 1 : 1,7, besonders bevorzugt 1 : 2,1 bis 1 : 1,9 vor. vor. Die Menge des verwendeten CaCO₃ ist bei der Durchführung des erfindungsgemäßen Verfahrens nicht von Bedeutung. Das aufzuarbeitende, die Komponenten B und C enthaltende Wasser wird über das CaCO₃ geleitet. Das CaCO₃ löst sich entsprechend dem Lösungsgleichgewicht in dem Wasser, der Überschuß bleibt als Feststoff, z. B. in einem Festbett, zurück.

Die dem Wasser in Form von B und C zugesetzten Massen werden einfach aus dem gewünschten Grad der Aufhärtung und Pufferung errechnet. Bei einer Mischung von:
0,2 mol CaCO₃ : 1 mol CaCl₂ : 1,8 mol NaHCO₃, wurde eine Aufhärtung von 1,3°dH, bei Einsatz von 100 mg Mischung pro Liter Wasser erreicht. Gleichzeitig nahm die Eisenkonzentration von 2,4 mg/l im Rohwasser auf 0,08 mg/l im aufbereiteten Wasser ab. Bei dieser Zusammensetzung nimmt die Leitfähigkeit pro 100 mg/l um 115 ± 10 µS/cm zu. Der Wirkungsgrad der Aufhärtung bez. auf die Summe an Calcium und Magnesium aus A und B ist von der Rohwasserbeschaffenheit abhängig.

Je nach Bedarf ist eine Dosierung von insgesamt 5 - 1500 mg/l der Zubereitung besonders sinnvoll. Die häufigsten Dosen liegen zwischen 50 und 300 mg/l. Im allgemeinen werden die Mindestanforderungen für Trinkwasser mit 100 bis 200 mg/l erfüllt.

Ein weiterer Gegenstand der vorliegenden Erfindung ist die Verwendung der oben beschriebenen Zusammensetzung zur Aufbereitung von sauren und alkalischen Gewässern, insbesondere von stehenden Gewässern, und von Trinkwasser, welches z. B. durch Filtration und durch übliche Aufbereitungsanlagen erhalten wird. Die Einstellung des Kalk-Kohlensäure-Gleichgewichtes geschieht rasch.

Ein weiterer Gegenstand ist die Verwendung der oben beschriebenen Zusammensetzung zur Bodensanierung, insbesondere von sauren Waldböden.

### Beispiele

Feldversuche haben ergeben, daß die oben beschriebene Zusammensetzung bei stehenden Gewässern, nämlich Teichen in städtischen Anlagen und Gartenteichen, langfristig einen pH-Wert von 8,1 ergab.

Außerdem wurde festgestellt, daß bereits nach drei Tagen nach Einbringung der erfindungsgemäßen Zusammensetzung eine Trübung beobachtet werden konnte, die auf eine Belebung des Gewässers durch Mikroorganismen zurückzuführen ist.

Untersucht wurde eine Mischung mit dem Zusammensetzungsbereich:
A = 0.9, B = 2.4, C = 6.0 (Stoffmengenproportion), entsprechend:
A:B:C =1:2,7:6,7, mit C = n(NaHCO₃) + n(KHCO₃).

Die Versuchsergebnisse sind in Tabelle 1 dargestellt.

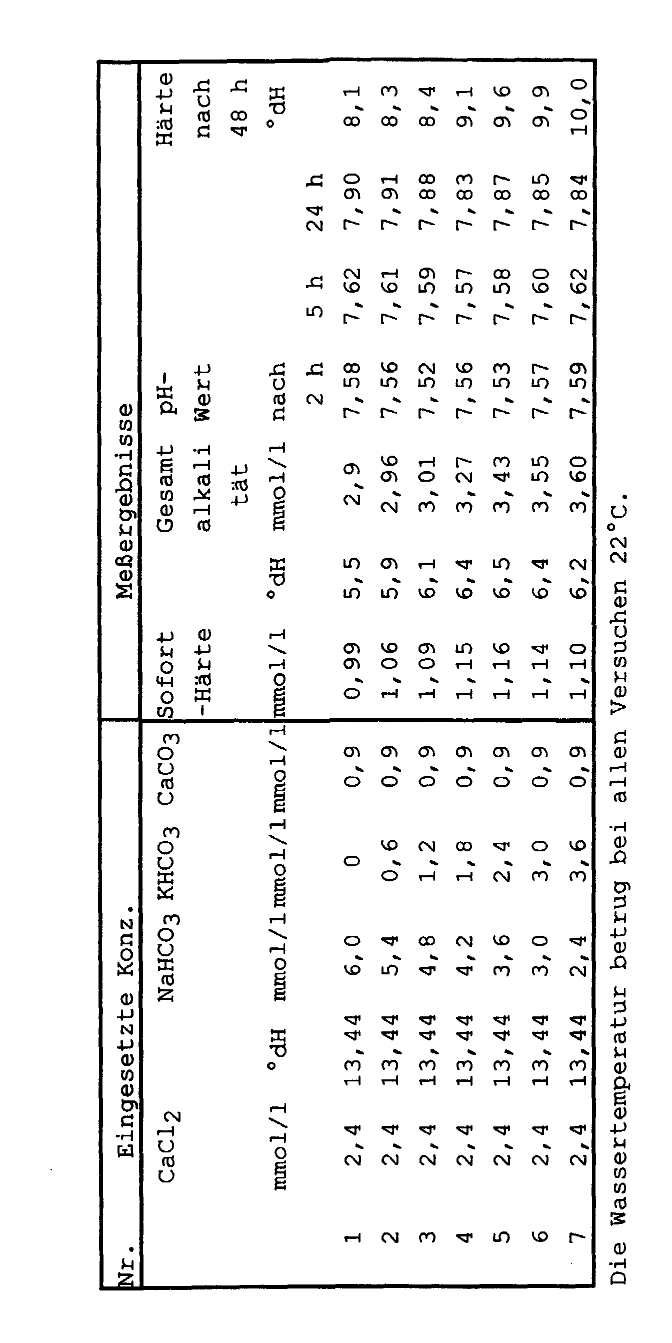

Die Variation der Na- bzw. K-Hydrogencarbonatstoffmengenanteile, erbrachte das überraschende Ergebnis, daß das Ausmaß der Sofortaufhärtung bei einem KHCO₃-Anteil, bezogen auf den Hydrogencarbonatstoffmengenanteil, von 0,4 ein Maximum aufweist. Auch sind die niedrigen resultierenden Gesamthärten ungewöhnlich. Während reines Calciumchlorid eine der Einwaage entsprechende Aufhärtung beim Auflösen ergiebt, findet beim Losen der erfindungsgemäßen Zusammensetzung nur eine teilweise Aufhärtung statt (Soforteffekt ca. 40-110 %, bez a. CaCl₂). Diesem Anteil der Härte steht eine entsprechende Gesamtalkalität der Lösung gegenüber. Überraschenderweise wurde festgestellt, daß im Zuge der Gleichgewichtseinstellung nach dem Kalk-Kohlensäure-Gleichgewicht (KKG) ein anfänglicher Überschuß der Gesamtalkalität sehr rasch zugunsten einer steigenden Gesamthärte abnimmt. Da dem Anstieg der Gesamthärte letztlich der äquivalente Teil an Gesamtalkalität (filtrierte Lsg. !) gegenübersteht, weist das Wasser durch die Behandlung (Anstieg der Cl⁻-Konz.) keine gesteigerte Agressivität gegenüber metallischen Werkstoffen in Wasserleitungen auf (C.L. Kruse, Korrosion, VCH).

Der pH-Wert aller Ansätze steigt mit der Zeit kontinuierlich an. Nach ca. 48 h beträgt der pH-Wert in allen Ansätzen 8,2± 0,05. Dieser zeitlich konstante Wert spricht für eine stabile Lage nach dem KKG. Die Möglichkeit des Gasaustausches an der Grenzfläche Lösung/Luft erhöht die Geschwindigkeit der Gleichgewichtseinstellung.

Obwohl fast jede Zusammensetzung innerhalb des beschriebenen Zusammensetzungsbereiches zur Einstellung des ΔpH-Wertes von kleiner 0,2 und eines Sättigungsindexes von kleiner 0,2 (gemäß DIN 38404 C10)erzielt, hat sich eine Mischung aus 3 mmol CaCl₂ , 6 mmol NaHCO₃ und 0,6 mmol CaCO₃ im Versuch bei mit CO₂ - gesättigtem destilliertem Wasser als besonders effektiv herausgestellt. Die Ergebnisse sind in nachfolgender Tabelle dargestellt:

| Am Anfang | nach 1 h | nach 24 h | | | |
|---|---|---|---|---|---|
| pH | pH | pH | c(Ca²⁺) [mmol/l] | KS4,3 [mmol/l] | SI; ΔpH |
| 4,3 | 6,98 | 7,08 | 3,54 | 6,33 | 0,25; 0,16 |

Im Versuchsverlauf näherten sich sowohl der Sättigungsindex SI, als auch der ΔpH-Wert rasch dem Wert 0,10 an.

In einem 1,44 ha großen Teich wurde durch die Einstreuung von 2 to einer Mischung aus 0,1 mmol CaCO₃ : 1 mmol CaCl₂ : 2 mmol NaHCO₃ , die Härte mit einem Wirkungsgrad von ca 90 % erhöht, bei entsprechendem Pufferungserfolg und einer Reduktion des Eisengehaltes von ca. 0,55 mg/l auf ca. 0,15 mg/l.

Versuche in dem System CaCl₂-NaHCO₃ und CaCl₂-KHCO₃ zeigen, daß der pH-Wert ohne die Komponente A mit der Zeit deutlich sinkt. Die Ergebnisse sind in der folgenden Tabelle 2 dargestellt:

**Tabelle 2**

| c(CaCl₂) | c(KHCO₃) | pH-Wert | nach 5 h | nach 24 h |
|---|---|---|---|---|
| | | nach 2 h | | |
| 2,4 mmol/l | 6 mmol/l | 7,94 | 7,91 | 7,81 |

| c(CaCl₂) | c(NaHCO₃) | pH-Wert | nach 5 h | nach 24 h |
|---|---|---|---|---|
| | | nach 2 h | | |
| 2,4 mmol/l | 6 mmol/l | 7,92 | 7,91 | 7,83 |

Durch die Verwendung von frisch gefällten Qualitäten an CaCO₃, wird eine schnelle Gleichgewichtseinstellung erleichtert. Ohne Zugabe dieser festen Phase wurde eine vergleichbare Gleichgewichtslage nicht erreicht.

## Patentansprüche

1. Zusammensetzung zur Aufbereitung von Wasser und Böden enthaltend
A. CaCO₃,
B. CaCl₂ und/oder Ca(NO₃)₂ und ggf. Magnesiumsalze,
C. NaHCO₃ und ggf. KHCO₃,
wobei die Komponenten A und B in Stoffmengenverhältnissen von 0,01 : 1 bis 2 : 1 und die Komponenten B und C in Stoffmengenverhältnissen von 1 : 3 bis 2 : 1 vorliegen.

2. Zusammensetzung nach Anspruch 1, **dadurch gekennzeichnet, daß** die Komponente B aus CaCl₂ und/oder Ca(NO₃)₂ und Magnesiumsalzen aus der Gruppe Chlorid, Nitrat, Carbonat, Oxid und Sulfat besteht, wobei CaCl₂ und/oder Ca(NO₃)₂ und die Magnesiumsalze in einem Stoffmengenverhältnis von 0,8 : 1 bis 10 : 1, bevorzugt 1 : 1 bis 6 : 1, vorliegen.

3. Zusammensetzung nach Anspruch 1 oder 2, **dadurch gekennzeichnet, daß** die Komponente A und die Komponente B in einem Stoffmengenverhältnis von 1 : 1,3 bis 1,3 : 1 vorliegt.

4. Zusammensetzung nach Anspruch 1 oder 2, **dadurch gekennzeichnet, daß** die Komponente A und die Komponente B in einem Stoffmengenverhältnis von 1 : 1,3 bis 1 : 2 vorliegt.

5. Zusammensetzung nach einem der Ansprüche 1 bis 4, **dadurch gekennzeichnet, daß** die Komponente C aus NaHCO₃ und KHCO₃ besteht, wobei NaHCO₃ und KHCO₃ in Stoffmengenverhältnissen von 10 : 1 bis 1 : 1 vorliegen.

6. Zusammensetzung nach einem der Ansprüche 1 bis 5, **dadurch gekennzeichnet, daß** die Komponente A bis zu 25 Gew.-% MgCO₃ enthält.

7. Zusammensetzung nach einem der Ansprüche 1 bis 6, **dadurch gekennzeichnet, daß** sie zusätzlich Na₂CO₃ in einer Menge von bis zu 20 % bezogen auf die Stoffmenge der Komponente C enthält.

8. Verfahren zur Aufbereitung von Wasser, **dadurch gekennzeichnet, daß** man Komponenten B, CaCl₂ und/oder Ca(NO₃)₂ und ggf. Magnesiumsalze, und C, NaHCO₃ und ggf. KHCO₃, getrennt in H₂O löst, die Lösungen mit dem zu reinigenden Wasser vermischt und das erhaltene Gemisch über CaCO₃ leitet.

9. Verfahren nach Anspruch 8, **dadurch gekennzeichnet, daß** das CaCO₃ als Festbett vorliegt.

10. Verwendung der Zusammensetzung nach einem der Ansprüche 1 bis 6 zur Aufbereitung von sauren und alkalischen Gewässern, insbesondere von stehenden Gewässern und Trinkwasser.

11. Verwendung der Zusammensetzung nach einem der Ansprüche 1 bis 6 zur Bodensanierung, insbesondere von sauren Waldböden.

## Claims

1. Composition for treatment of water and soils comprising
A. CaCO₃,
B. CaCl₂ and/or Ca(NO₃)₂ and, optionally, magnesium salts,
C. NaHCO₃ and, optionally, KHCO₃,
whereby components A and B are present in a molar ratio of from 0.01 : 1 to 2:1 and components B and C are present in a molar ratio of from 1 : 3 to 2 : 1.

2. Composition according to claim 1, **characterized in that** component B comprises CaCl₂ and/or Ca(NO₃)₂ and magnesium salts selected form the group chloride, nitrate, carbonate, oxide and sulfate, whereby CaCl₂ and/or Ca(NO₃)₂ and the magnesium salts are present in a molar ratio of from 0.8 : 1 to 10 : 1, preferably from 1 : 1 to 6 : 1.

3. Composition according to claims 1 or 2, **characterized in that** component A and component B are present in a molar ratio of from 1 : 1.3 to 1.3 : 1.

4. Composition according to claims 1 or 2, **characterized in that** component A and component B are present in a molar ratio of from 1 : 1.3 to 1 : 2.

5. Composition according to one of the claims 1 through 4, **characterized in that** the component C comprises NaHCO₃ and KHCO₃, whereby NaHCO₃ and KHCO₃ are present in a molar ratio of 10 : 1 to 1 : 1.

6. Composition according to one of the claims 1 through 5, **characterized in that** component A contains up to 25 weight per cent MgCO₃.

7. Composition according to one of the claims 1 through 6, **characterized in that** the composition comprises additionally Na₂CO₃ in a molar amount of up to 20 % based on the molar amount of component C.

8. Process for the treatment of water, **characterized in that** component B, CaCl₂ and/or Ca(NO₃)₂ and optionally magnesium salts, and C, NaHCO₃ and optionally KHCO₃, are dissolved separately in water, the solutions are mixed with the water to be treated, and the mixture thus obtained is passed over CaCO₃.

9. Process according to claim 8, **characterized in that** the CaCO₃ is present in the form of a solid bed.

10. Use of the composition according to one of the claims 1 through 6 for the treatment of acidic and alkaline waters, especially standing bodies of water and drinking water.

11. Use of the composition according to one of the claims 1 through 6 for reconditioning of soils, especially for reconditioning of acidic soils of the forest floor.

## Revendications

1. Composition de traitement d'eau et d'assainissement de sols comprenant
A. CaCO₃,
B. CaCl₂ et/ou Ca(NO₃)₂ et, le cas échéant, des sels de magnésium,
C. NaHCO₃ et, le cas échéant, KHCO₃,
les composantes A et B étant présentes dans des rapports de quantités de substance en mol de 0,01 : 1 jusqu'à 2 : 1 et les composantes B et C étant présentes dans des rapports de quantités de substance en mol de 1 : 3 jusqu'à 2 : 1.

2. Composition selon la revendication 1, **caractérisée en ce que** la composante B se compose de CaCl₂ et/ou de Ca(NO₃)₂ et des sels de magnésium de la groupe de chlorure, nitrate, carbonate, oxyde et sulfate, CaCl₂ et/ou Ca(NO₃)₂ et les sels de magnésium étant présents dans des rapports de quantités de substance en mol de 0,8 : 1 jusqu'à 10 : 1, de préférence de 1 : 1 jusqu'à 6 : 1.

3. Composition selon la revendication 1 ou 2, **caractérisée en ce que** la composante A et la composante B sont présentes dans des rapports de quantités de substance en mol de 1 : 1,3 jusqu'à 1,3 : 1.

4. Composition selon la revendication 1 ou 2, **caractérisée en ce que** la composante A et la composante B sont présentes dans des rapports de quantités de substance en mol de 1 : 1,3 jusqu'à 1 : 2.

5. Composition selon une des revendications 1 à 4, **caractérisée en ce que** la composante C se compose de NaHCO₃ et de KHCO₃, NaHCO₃ et KHCO₃ étant présents dans des rapports de quantités de substance en mol de 10 : 1 jusqu'à 1 : 1.

6. Composition selon une des revendications 1 à 5, **caractérisée en ce que** la composante A comprend jusqu'à 25% en poids de MgCO₃.

7. Composition selon une des revendications 1 à 6, **caractérisée en ce qu'**elle comprend en outre Na₂CO₃ dans une quantité de jusqu'à 20% par rapport à la quantité de substance de la composante C.

8. Procédé de traitement d'eau, **caractérisé en ce qu'**on fait dissoudre les composantes B, CaCl₂ et/ou Ca(NO₃)₂ et, le cas échéant, des sels de magnésium, et C, NaHCO₃ et, le cas échéant, KHCO₃, séparément en H₂O, qu'on mélange les solutions avec l'eau à purifier et qu'on dirige le mélange obtenu sur CaCO₃.

9. Procédé selon la revendication 8, caractérisé en ce que le CaCO₃ est présent comme lit solide.

10. Utilisation de la composition selon une des revendications 1 à 6 pour le traitement des eaux acides et alcalines, notamment des eaux stagnantes et de l'eau potable.

11. Utilisation de la composition selon une des revendications 1 à 6 pour l'assainissement des sols, notamment des sols de fôret acides.
